# EUROPÄISCHE PATENTANMELDUNG

(11) **EP 2 163 433 A2**
(43) Veröffentlichungstag der Anmeldung: **17.03.2010**
(21) Anmeldenummer: 09167712.0
(22) Anmeldetag: 12.08.2009
(51) Int. Cl.: B60R 13/01

(54) **Ladeboden**

(30) Priorität: 18.08.2008 DE 202008011018 U
(71) Anmelder: friedola TECH GmbH, 37308 Geismar (DE)
(72) Erfinder: Holzapfel, Christoph, 37269 Eschwege (DE)
(74) Vertreter: Schwabe - Sandmair - Marx

(57) **Zusammenfassung**

Einlegeboden für einen Behälter bzw. Behälterboden, aufweisend
a) eine erste Materiallage (1) mit einer Oberseite (1a) und einer Unterseite (1 b), und
b) wenigstens eine zweite Materiallage (2) mit einer Oberseite (2a) und einer Unterseite (2b),
c) wobei die erste Materiallage (1) eine Kunststoffschaumschicht und die zweite Materiallage (2) eine Hohlkammerstruktur aus Kunststoff ist, wobei
d) die Oberseite (1a) der ersten Materiallage (1) mit der Unterseite (2b) der zweiten Materiallage (2) verbunden ist, so dass die erste Materiallage (1) relativ zur zweiten Materiallage (2) nicht bewegbar ist, und
e) wenigstens die Oberseite (2a) der zweiten Materiallage (2) eine geschlossene Fläche ist.

## Beschreibung

Die Erfindung betrifft einen Einlegeboden für einen Behälter, bevorzugt einen Einlegeboden für einen LKW bzw. dessen Ladefläche oder einen Bus bzw. den Passagierraum und/oder den Laderaum des Busses. Der Einlegeboden ist aus wenigstens zwei Materiallagen aufgebaut, einer unteren Lage, die direkt auf dem Behälterboden aufliegt, und einer oberen Lage, die über der unteren Lage liegt. Die Erfindung betrifft auch einen Behälterboden bzw. Ladeboden direkt.

Im Stand der Technik sind Einlegeböden bekannt, die zum Beispiel auf die Ladefläche eines LKW aufgelegt werden, um das Metall bzw. die das Metall versiegelnde Lackschicht vor Beschädigung durch das Ladegut zu schützen. In der Regel sind solche Ladeböden aus Holz gefertigt. Holz hat den Nachteil, dass es Feuchte aufnimmt und dadurch aufquillt, wobei die Wasseraufnahme gleichzeitig das Gewicht des Bodens erhöht. Holz ist zudem ein Naturstoff, der mit der Zeit verrottet und dann ersetzt werden muss. Zudem weisen Holzlatten oder Holzplatten per se eine glatte Oberfläche auf, so dass das Holz auf seiner Oberseite aufgeraut, profiliert oder mit einer Gummimatte belegt werden muss, um ein Verrutschen der geladenen Ware zu erschweren. Liegt eine Gummimatte auf dem Holzboden, so ist diese wiederum besonders gefährdet, beim Be- und Entladen durch Ecken oder Kanten des Ladegutes und/oder durch die Be- bzw. Endladegeräte beschädigt zu werden. Sowohl reine Holzeinlegeböden als auch solche mit Gummiauflage sind schwer zu reinigen.

Die Aufgabe der Erfindung ist es, einen Einlegeboden für einen Behälter oder den Boden eines Behälters zur Verfügung zu stellen, der haltbar ist, leicht gereinigt werden kann und keine Feuchte aufnimmt.

Gelöst wird diese Aufgabe durch einen erfindungsgemäßen Einlegeboden bzw. Behälterboden nach Anspruch 1.

Der Einlegeboden für einen Behälter oder der Behälterboden der Erfindung ist aus wenigstens zwei Materiallagen gebildet, einer ersten Materiallage mit einer Oberseite und einer Unterseite, und wenigstens einer zweiten Materiallage, ebenfalls mit einer Oberseite und einer Unterseite. Die untere, erste Materiallage wird dabei durch eine Kunststoffschaumschicht, zum Beispiel aus einem Polypropylenschaum, gebildet, die obere, zweite Materiallage durch eine Hohlkammerstruktur. Die Oberseite der ersten Materiallage ist mit der Unterseite der zweiten Materiallage so verbunden, dass sich die beiden Materiallagen nicht relativ zueinander bewegen können. Wenigstens die Oberseite der zweiten Materiallage ist eine geschlossene Fläche, zum Beispiel in Form einer geschlossenen Haut.

Bei der Hohlkammerstruktur handelt es sich bevorzugt um ein Tri-Laminat mit einer Unterschicht oder Bodenschicht, einer Oberschicht oder Deckschicht und einer dazwischen angeordneten Abstandshalteschicht oder Napfschicht. Bevorzugt ist es, wenn die Hohlkammerstruktur aus einem mit Talkum verstärkten Kunststoff gebildet ist.

Bevorzugt ist es, wenn auch wenigstens die Unterseite der ersten Materiallage in Form einer geschlossenen Haut ausgebildet ist. Dadurch kann in oder unter die Unterseite der ersten Materiallage kein Wasser oder Schmutz eindringen, und die Auflagefläche des Einlegebodens auf dem Behälterboden ist maximal. Vorteilhafterweise weist die geschlossene Haut der Unterseite eine Oberfläche oder Oberflächenstruktur auf, die einem Rutschen des Einlegebodens auf dem Behälterboden entgegenwirkt. Bildet der Boden direkt den Behälterboden, so verhindert er das Eindringen von Spritzwasser oder anderen Verunreinigungen in den Behälter. Der die erste Materiallage bildende Kunststoff kann offenporig oder geschlossenporig sein, bevorzugt wird ein Kunststoff gewählt, der gute Eigenschaften hinsichtlich der Geräuschdämpfung hat.

Die wenigstens zwei den Einlegeboden/Behälterboden bildenden Materiallagen können miteinander verklebt oder verschweißt sein, die zweite Materiallage kann auf die erste Materiallage aufkaschiert sein, et vice versa. Die beiden Materiallagen können aber auch auf jede andere Art und Weise verbunden sein, solange die Verbindung eine Relativbewegung der beiden Materiallagen relativ zueinander verhindert. Die Verbindung zwischen den wenigstens zwei Materiallagen soll weiterhin derart sein, dass weder Wasser noch Schmutz zwischen die beiden Lagen gelangen kann.

Besonders bevorzugt ist es, wenn die wenigstens zwei Materiallagen aus dem gleichen Kunststoff oder ähnlichen Kunststoffen gebildet sind. Dies erleichtert und optimiert die Möglichkeiten der Wiederaufbereitung bzw. des Recyclings der Einlegeböden/Behälterböden der Erfindung. Das so zurück gewonnene Material kann dann beispielsweise insgesamt oder als Beimischung in der Produktion von neuen Einlegeböden oder anderen Teilen Verwendung finden.

Zur Herstellung der Einlegeböden/Böden kann jede der Materiallagen einzeln gefertigt werden und anschließend mit der oder den anderen Materiallagen zu dem Einlegeboden/Behälterboden verbunden, beispielsweise verklebt oder verschweißt werden. Bevorzugt ist es aber, wenn bei der Herstellung der Hohlkammerstruktur, die die zweite Materiallage bildet, die erste Materiallage inline aufgebracht wird. Dazu kann die erste Materiallage entweder als Bahnmaterial von zum Beispiel einer Vorratsrolle in die Produktionsanlage für die Hohlkammerstruktur eingegeben werden. Die Verbindung der beiden Materiallagen findet dann in der Maschine anschließend an die Fertigung der Hohlkammerstruktur statt. Alternativ können auch beide Materiallagen gleichzeitig in einer Anlage erstellt und anschließend zusammengefügt werden oder in einem Produktionsprozess ohne nachfolgende Zusammenführung entstehen.

Zusätzlich zu den beschriebenen zwei Materiallagen kann der Einlegeboden/Behälterboden eine weitere dritte Materiallage aufweisen, die in der Sprache der Anmeldung dann die obere Lage bildet, während die zweite Lage jetzt zwischen der ersten Lage und der dritten Lage angeordnet ist. In dieser Anordnung kann die Hohlkammerstruktur sowohl an ihrer Oberseite als auch an ihrer Unterseite offen sein, zum Beispiel kann die Hohlkammershicht eine wabenförmige Struktur aufweisen, oder eine Struktur aus aneinander liegenden Ringen, oder anderen geeigneten Formen. Bevorzugt ist aber die Verwendung einer Hohlkammerstruktur mit einer Unterschicht, einer Oberschicht und einer dazwischen liegenden Napfschicht.

Die dritte Materiallagen weist wie die beiden anderen Materiallagen eine Oberseite und eine Unterseite auf, die Unterseite der dritten Materiallage wird mit der Oberseite der zweiten Materiallage wie oben bereits beschrieben verklebt, verschweißt, aufkaschiert oder auf andere Art verbunden. Die Oberseite der dritten Materiallage ist bevorzugt als geschlossene Haut gebildet, sie kann eine Oberflächenstruktur aufweisen, die das Rutschen von auf ihr abgestellten Behältern hemmt. Die geschlossene Oberfläche bietet zudem den Vorteil, dass die Materiallage zum Beispiel bedruckt werden kann, so dass die sichtbare Oberfläche des Einlegebodens/Behälterbodens entsprechend dekorierbar ist.

Um den Einlegeboden/Behälterboden leicht und weitestgehend wieder verwenden zu können, ist es vorteilhaft, wenn auch die dritte Materiallage aus einem Kunststoff besteht, der aus einer gleichen oder ähnlichen Kunststofffamilie stammt, wie der oder die Kunststoff/e der beiden bzw. einer der beiden anderen Materiallagen.

Als besonders geeignetes Hohlkammermaterial kann zum Beispiel das Con-Pearl^{®}-Material der friedola TECH benutzt werden, die dritte Materiallage oder wenigstens deren sichtbare Oberfläche kann aus einem festen Gewebe, zum Beispiel einem PP-Gewebe, oder einem Gewirke gebildet sein. Um die Haltbarkeit der sichtbaren Oberfläche der dritten Materiallage zu erhöhen, kann diese zusätzlich noch eine TPO-Beschichtung aufweisen. Die Oberfläche kann gummiartig sein, was zum Beispiel bei der Verwendung als Fahrzeugboden eines Busses im Passagierbereich die Sicherheit gegen Ausrutschen erhöht. Handelt es sich um ein Gewirke, so kann es sich entweder um Kulierwirkware handeln, bei der nur mit einem Faden gestrickt wird, oder um Kettenwirkware, bei der viele Fäden benutzt werden.

Wie bereits oben für den zweilagigen Einlegeboden/Behälterboden beschrieben, kann der dreilagige Einlegeboden/Behälterboden auf unterschiedliche Art und Weise hergestellt werden. Die dritte Schicht kann beispielsweise nachträglich auf die Oberfläche der Hohlkammerstruktur aufgebracht, beispielsweise verklebt oder verschweißt werden. Es kann aber auch die erste Materiallage und die dritte Materiallage als Bahnware in die Produktionsanlage für die Hohlkammerstruktur eingegeben werden, und die drei Schichten werden in der Produktionsanlage nach der Fertigstellung der Hohlkammerstruktur inline verbunden. Schließlich können auch alle drei Materiallagen in einer Produktionsanlage hergestellt und zusammengefügt werden.

Bei den Behältern, in die der Einlegeboden eingelegt werden soll, kann es sich um große Transportkisten, Container, Nutzfahrzeuge oder Teile von Nutzfahrzeugen handeln, Bevorzugt handelt es sich aber um die Ladeflächen von LKWs und um den Boden vom Passagierraum und/oder Laderaum von Bussen, Bahnen und anderen Transportmitteln, wie zum Beispiel Gondeln. Gerade beim Einsatz als Fahrzeugboden von Bussen oder Bahnwagen ist die oben erwähnte Benutzung eines Kunststoffs mit guten Geräuschdämmeigenschaften für die erste Materiallage bevorzugt. Dabei ist der Einsatz des erfindungsgemäßen Einlegebodens nicht auf den Boden begrenzt, wo notwendig kann der Einlegeboden auch weitere Wände von zum Beispiel Transportbehältem verkleiden.

Der gemäß der vorgehenden Beschreibung aufgebaute Einlegeboden/Behälterboden weist gegenüber den bekannten Einlegeböden/Behälterböden zahlreiche Vorteile auf, wie zum Beispiel eine veritable Gewichtsreduzierung, die eine höhere Zuladung erlaubt und/oder den Verbrauch des Fahrzeuges an Treibstoff, und damit die Menge des ausgestoßenen CO₂ reduziert. Die Reduzierung des Treibstoffverbrauchs und/oder die erhöhte Zuladung wirken sich positiv auf die Betriebskosten aus. Das Schaummaterial an der Unterseite dämmt die Fahrgeräusche und auch die Geräusche der bewegten Maschinenteile, wie zum Beispiel die Laufgeräusche der Reifen, Luftgeräusche und andere Geräuschquellen, hauptsächlich an der Unterseite des Fahrzeugs. Der erfindungsgemäße Einlegeboden/Behälterboden zeichnet sich durch hervorragende Schlagfestigkeit aus und ist kratzunempfindlich. Die bevorzugt gleichmäßige Oberfläche ist feuchtigkeitsresistent, leicht zu reinigen und schmutzunempfindlich. Dies kann unter anderem beim Transport von Lebensmitteln, wie Obst oder Gemüse, vorteilhaft sein, oder beim Transport von lebenden Tieren, da eine anschließende gründliche Reinigung und/oder Desinfektion schnell und umfassend durchführbar ist. Ein weiterer Vorteil ist die im Normalfall lange Haltbarkeitsdauer des Einlegebodens der Erfindung gegenüber herkömmlichen Holzeinlegeböden.

Bevorzugt nachträglich können in oder an den Einlegeboden/Behälterboden zusätzliche Elemente eingearbeitet oder angebracht werden. Dabei kann es sich je nach Verwendung des Einlegebodens/Behälterbodens beispielsweise um Verzurrschlitze, Verzurrösensitze, Laderaumschiebetürverprägungen, Heckabschlussverprägungen oder Half-Cut-Rillen bei einteiligen Ausführungen handeln. Einige oder alle dieser Durchbrechungen, Prägungen oder Rillungen können auch bereits im Produktionsprozess des Einlegebodens/Behälterbodens vorbereitet oder in diesen eingebracht werden, wobei dies nur bei großen Stückserien von gleichen Produkten sinnvoll sein wird.

Die erste Materiallage, die bevorzugt aus PE-Schaum gefertigt ist, kann eine Dicke von 2 mm bis 10 mm aufweisen, bevorzugt ist sie zwischen 2,5 mm und 5 mm dick, ganz besonders bevorzugt 3 mm. Der Einlegeboden/Behälterboden kann eine Gesamtdicke von 50 mm bis 150 mm aufweisen, bevorzugt weist er eine Dicke von 80 mm bis 120 mm, besonders bevorzugt eine Dicke von 100 mm ± 5 mm auf. Die Flächenbelastung des Einlegebodens/Behälterbodens soll bei wenigstens 3.000 kg/m² liegen, die durchschnittliche Flächenbelastung bei 3.800 kg/m². Dabei soll der Einlegeboden/Behälterboden ein Gewicht pro Quadratmeter von ungefähr 4 kg (3.600 g/m² bis 4.200 g/m²) haben, bevorzugt beträgt das Gewicht ca. 3.800 g/m².

Schließlich soll auch der Fall mit umfasst sein, dass der Einlegeboden den Behälterboden mitbildet oder der Einlegeboden den Behälterboden allein bildet. So kann beispielsweise der Behälter nur ein Bodenskelett aufweisen, auf das der erfindungsgemäße Einlegeboden aufgelegt wird und erst dadurch ein geschlossener Behälterboden entsteht.

Die Erfindung betrifft auch ein Verfahren zur Herstellung von Einlegeböden/Behälterböden. Dabei wird in einer Anlage zur Herstellung einer flachen Hohlkammerstruktur von wenigstens einer Vorratsrolle oder wenigstens einem Speicher wenigstens eine Materiallage an einer Stelle vor oder nach der Fertigstellung der Hohlkammerstruktur in die Anlage eingeführt, die Materiallage mit der fertigen oder entstehenden Hohlkammerstruktur zusammengeführt und mit dieser inline verbunden, beispielsweise verklebt, verschweißt oder aufkaschiert.

Wird mehr als eine Materiallage der Produktion der Hohlkammerstruktur zugeführt, so können beide Materiallagen der Anlage an gleicher Stelle im Produktionsprozess der Hohlkammerstruktur oder jede der Materiallagen der Anlage an einer anderen Stelle im Produktionsprozess zugeführt werden. Stellen im Produktionsprozess sind unter anderen vor dem Beginn der Herstellung der Hohlkammerstruktur, beim Prozess der Herstellung der Hohlkammerstruktur, oder nach der Fertigstellung der Hohlkammerstruktur, sowie jede denkbare Zwischenstelle. Auch das Verbinden der mehr als zwei Materiallagen wird inline in der Anlage zur Herstellung der Hohlkammerstruktur bewirkt.

Als Alternative können eine oder mehrere oder alle Materiallagen, die zusammen mit der Hohlkammerstruktur den Einlegeboden/Behälterboden bilden, in der gleichen Anlage hergestellt und miteinander verbunden werden.

Die Einlegeböden/Behälterböden können in Plattenform hergestellt werden, die anschließend für den speziellen Einsatz konfektioniert werden, wobei zum Beispiel auch die Ränder des Endprodukts zum Beispiel durch Wärmezufuhr abgedichtet werden können, so dass keine offene Kammer der Hohlkammerstruktur sichtbar ist, sondern am Umfang des Einlegebodens/Behälterbodens eine geschlossene Fläche entsteht. Die Konfektionierung kann beispielsweise per Laserschnitt erfolgen, wodurch gleichzeitig die offenen Seiten versiegelt werden können. Die Konfektionierung kann aber auch durch Fräsung der Plattenware oder durch Schneiden mittels eines Wasserstrahls erfolgen. Weniger bevorzugt, bei entsprechenden Stückzahlen aber denkbar, ist auch eine Herstellung eines konfektionierten Endprodukts direkt in der Anlage. Dabei können nicht nur Außenmaße der Einlegeböden/Behälterböden automatisch hergestellt werden, sondern das Material für die Einlageböden kann zusätzlich dreidimensional verformt werden, um sich beispielsweise der Form des Behälterbodens anzupassen. Diese dreidimensionale Verformung kann natürlich auch an Plattenmaterial nach dessen Konfektionierung oder bei dessen Konfektionierung in einem weiteren Arbeitsschritt in einer weiteren Verarbeitungsmaschine erfolgen.

Im Folgenden wird die Erfindung anhand eines Ausführungsbeispiels näher erläutert Die Figuren und die Beschreibung des Ausführungsbeispiels sollen die Erfindung aber in keiner Weise einschränken. Merkmale, die nur in den Figuren oder in der Figurenbeschreibung offenbart sind, gehören zur Erfindung.

Die Figuren zeigen im Einzelnen:
- Figur 1:: den schematischen Aufbau des Ladebodens in einer Querschnittsansicht;
- Figur 2:: eine perspektivische Draufsicht auf einen erfindungsgemäßen Ladeboden;
- Figur 3:: eine Draufsicht auf den Ladeboden;
- Figur 4:: einen Ausschnitt aus dem Ladeboden mit diversen Modifizierungen; und
- Figur 5:: den Ladeboden im Ausschnitt mit Verprägung für eine Laderaumtür.

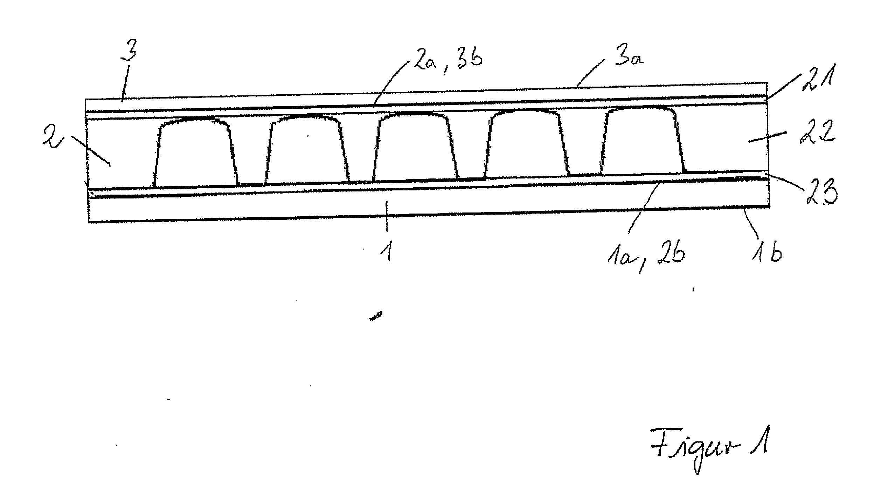

In Figur 1 ist ein bevorzugter Aufbau eines Einlegebodens für einen Behälter gezeigt, der aus drei Materiallagen, einer unteren Materiallage 1, einer oberen Materiallage 3 und einer dazwischen liegenden Materiallage 2 aufgebaut ist.

Die untere oder erste Materiallage 1 ist aus einer Kunststoffschaumschicht gebildet und liegt direkt auf dem Behälterboden auf. Bei dem Kunststoffschaum kann es sich um einen Schaum mit offenen oder geschlossenen Poren handeln, zum Beispiel kann ein offenporiger Polypropylenschaum verwendet werden. Die Materiallage 1 weist eine Oberseite 1a und eine Unterseite 1b auf. Mit der Unterseite 1b, die bevorzugt eine geschlossene Haut bildet, liegt der Einlegeboden weitestgehend ganzflächig auf dem Behälterboden auf. Die sichtbare Oberfläche der Unterseite 1b kann aufgeraut oder strukturiert sein, zum Beispiel Noppen oder Rillen aufweisen, um ein Verrutschen des Einlegebodens auf dem Behälterboden zu hemmen.

Die erste Materiallage 1 kann eine Stärke von 3 mm aufweisen, sie kann aber auch bis zu 10 mm dick sein, oder dünner als 3 mm, beispielsweise 2 mm dick sein. Bevorzugt ist es, wenn die erste Materiallage 1 gute geräuschdämpfende Eigenschaften aufweist, so dass Geräusche, die von der Unterseite des Behälters, beispielsweise eines LKWs oder Busses, durch mechanische Teile, die Reifen oder die unter dem Behälter strömende Luft, erzeugt werden oder auftreten, weitestgehend reduziert werden. Dadurch kann der Geräuschpegel zum Beispiel im Innenraum des Busses merklich reduziert werden.

Der Oberseite 1a der ersten Materiallage 1 gegenüberliegend ist eine zweite Materiallage 2 angeordnet, die ebenfalls eine Oberseite 2a und eine Unterseite 2b aufweist. Dabei liegen sich die Oberseite 1a der ersten Materiallage 1 und die Unterseite 2b der zweiten Materiallage 2 direkt gegenüber. Die beiden Materiallagen 1, 2 sind in diesem Bereich miteinander verbunden, beispielsweise verklebt, verschweißt oder aufkaschiert. Dabei kann die Oberseite 1a mit der Unterseite 2b ganzflächig, nur bereichsweise oder nur punktuell verbunden sein. Bevorzugt ist eine ganzflächige Verbindung, das heißt eine vollständige Verklebung, Verschweißung oder Aufkaschierung der beiden sich gegenüberliegenden Seiten 1a, 2b, so dass die erste Materiallage 1 und die zweite Materiallage 2 auch nicht bereichsweise relativ zueinander bewegt werden können, sondern nur als gemeinsame Lage verschoben und angehoben werden können.

Die zweite oder mittlere Materiallage 2 besteht aus drei Schichten, einer Oberschicht 21, einer Unterschicht 23 und einer dazwischen liegenden Abstandsschicht 22. Dabei sind die Oberschicht 21 und die Unterschicht 23 als flache Platten ausgebildet, während die Abstandsschicht 22 eine dreidimensionale nicht plattenförmige Struktur aufweist. So entsteht ein Tri-Laminat, wie das zum Beispiel von der Firma friedola TECH zu beziehende Con-Pearl^{®}-Material.

Die Abstandsschicht 22 sorgt im Wesentlichen für die Festigkeit des Einlegebodens, bzw. ist verantwortlich für die maximal mögliche Flächenbelastung des Einlegebodens. Sie kann insgesamt eine Höhe von 50 mm bis 150 mm haben, bevorzugter von 80 mm bis 120 mm. Besonders bevorzugt ist eine Bauhöhe von 100 mm ± 5 mm. Die Flächenbelastung soll nicht unter 3.000 kg/m² liegen, die durchschnittliche Flächenbelastung soll 3.800 kg/m² betragen.

Die die zweite Materiallage 2 bildende Hohlkammerstruktur kann aus dem gleichen oder ähnlichen Kunststoff hergestellt sein, wie die erste Materiallage 1. Bevorzugt wird die Hohlkammerstruktur aus einem mit Talkum verstärkten Kunststoff gebildet.

Auf der zweiten oder mittleren Materiallage 2, bzw. der Oberseite 2a befindet sich eine weitere dritte Materiallage 3. Diese weist ebenfalls eine Unterseite 3b und eine Oberseite 3a auf, wobei die Unterseite 3b mit der Oberseite 2a der zweiten Materiallage 2 in bekannter und vorbeschriebener Weise verklebt, verschweißt oder auf dies aufkaschiert ist.

Die dritte Materiallage 3 kann aus einer Kunststoffschicht bestehen, auf deren Oberseite 3a ein Gewebe oder Gewirke aufgebracht, zum Beispiel aufkaschiert ist. Das Gewebe oder Gewirke kann auch allein die dritte Materiallage bilden. Die dritte Materiallage 3 kann, zum Beispiel wenn als Bodenbelag im Passagierraum eines Busses vorgesehen, gummiartig sein, um einem Ausrutschen der Fahrgäste auf dem Boden entgegenzuwirken. Das Material, das die gummiartige Materiallage 3 oder deren sichtbare Oberfläche bildet, kann zum Beispiel einfärbbar und/oder bedruckbar sein. Dadurch könnte auf ein zusätzliches Einlegen eines Teppichs verzichtet werden, wenn eine bestimmte Bodenfarbe oder ein bestimmtes Muster auf dem Boden vom Betreiber aus Gründen zum Beispiel der Corporate Identity / des Corporate Design gewünscht ist. Die dritte Materiallage oder deren sichtbare Oberfläche kann auch durch ein Kunststoffgewebe oder -gewirke gebildet sein, wie sie zum Beispiel von der Firma LECO angeboten werden.

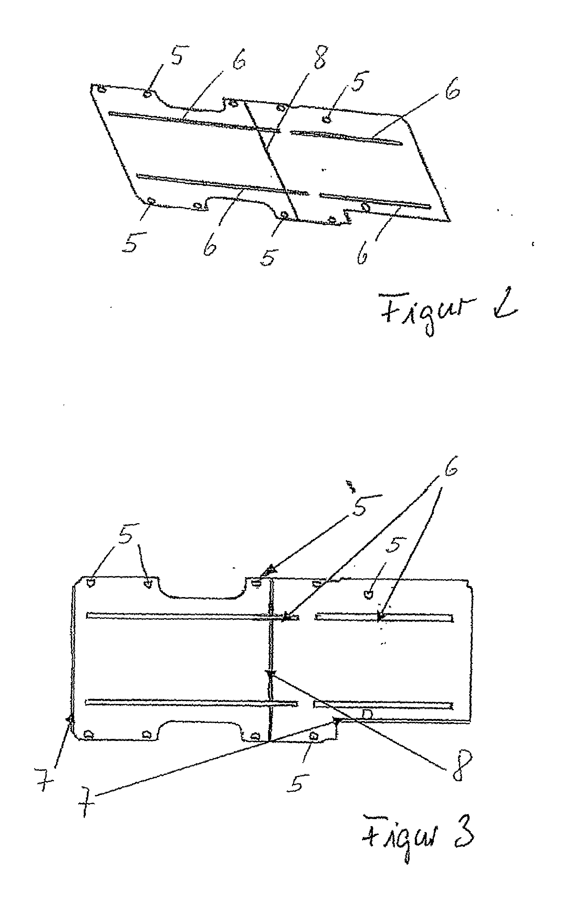

Die Figur 2 zeigt eine perspektivische Ansicht eines einlegbaren Ladebodens. Die gleiche Ansicht, nur in einer Draufsicht zeigt die Figur 3. Der Ladeboden ist bevorzugt in einem Stück hergestellt, kann aber auch aus zwei oder mehreren Teilen hergestellt sein, die dann erst beim Einlegen auf den Behälter- oder Fahrzeugboden entweder durch Formschluss, mechanische Verschlusselemente oder durch beispielsweise Verklebung zusammengefügt werden. Bevorzugt ist der Ladeboden aber in einem Stück hergestellt, wobei er in diesem Fall eine Halfcut-Rille 8 aufweist, entlang der er zu Lager- und Transportzwecken, sowie zum leichteren Einbau in den Behälter zusammengelegt werden kann. Der Ladeboden weist verschiedene entweder während der Produktion oder danach zusätzlich durch Verformung, Stanzung, Pressung oder andere Bearbeitungsmethoden eingearbeitete Funktionselemente auf. Im Einzelnen sind in den Ladeboden der Figuren 2 und 3 mehrere Verzurrösensitze 5 eingearbeitet, zum Beispiel eingestanzt, durch die am Laderaumboden befestigte Verzurrösen durch den Einlegeboden hervorstehen können, so dass die Ladung vorschriftsmäßig verzurrt werden kann. Die Verzurrösensitze 5 sind zum Beispiel aus dem Ladeboden ausgestanzt bzw. in diesen eingeschnitten, beispielsweise mittels eines Laserschneideverfahrens. Zusätzlich können die Verzurrösensitze 5 am Umfang teilweise oder vollständig umlaufende Verprägungen aufweisen, so dass die Verzurrösen, die nicht zur Verzurrung der Ladung benötigt werden so umgelegt werden können, dass sie im umgelegten Zustand nicht über die Ladebodenoberfläche vorstehen und somit keine Stolperfallen für den Bediener darstellen, bzw. beim Abstellen von Ladung auf der Position der Verzurröse diese nicht in die Ladebodenoberfläche eindrücken. Das Verprägen hat den weiteren Vorteil, dass die Hohlkammerstruktur im Bereich der Ausstanzung oder des Ausschnittes wieder geschlossen wird, so dass weder Flüssigkeit noch Dreck in den ansonsten offenen Hohlkammerbereich eindringen kann. Des Weiteren sind in dem Ladeboden der Figuren 2 und 3 Verzurrschienensitze 6 zu erkennen, für die im Wesentlichen das Gleiche gilt wie für die Verzurrösensitze.

Schließlich sind auch noch Verprägungen 7 im Bereich der Laderaumschiebetür und des Heckabschlusses der Ladefläche zu erkennen. Diese dienen einmal dazu, die Form des Ladebodens in den Bereichen, in denen Ladegut in den Laderaum eingeführt oder aus dem Laderaum herausgenommen wird, so anzupassen, dass das Ladegut beim Einladen nicht seitlich gegen den Ladeboden drücken kann, da der Ladeboden im Bereich der Ladeöffnungen des Laderaums als schiefe Ebene ausgebildet ist. Dadurch wird eine Beschädigung des Ladebodens im Bereich der Ladeöffnung weitestgehend vermieden.

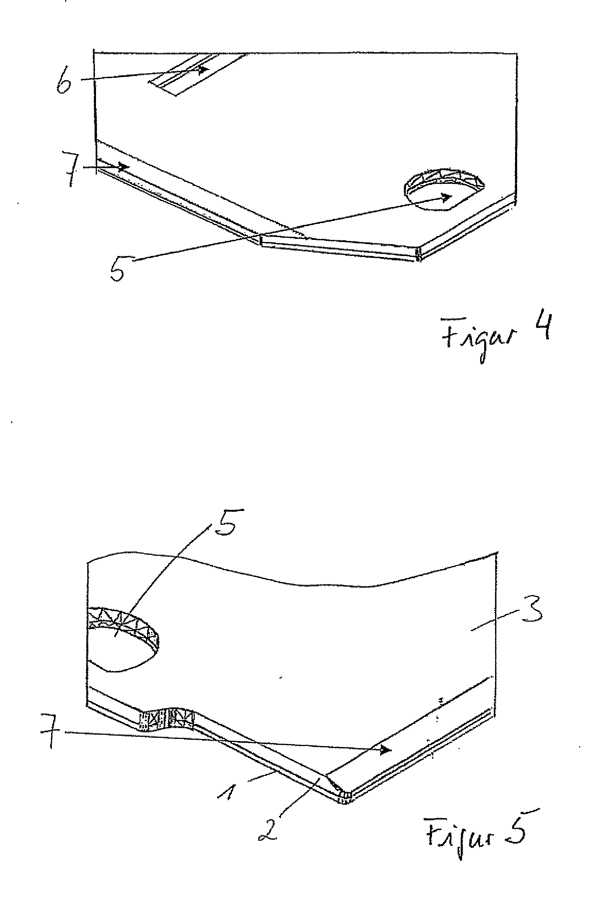

Die Figur 4 zeigt einen Ausschnitt eines Ladebodens mit einer Verprägung 7, einem ersten Durchbruch für einen Verzurrschienensitz 6, der an den Innenseiten verprägt ist, und einem zweiten Durchbruch für eine Verzurrösensitz 5 ohne Verprägung. Bei dem Verzurrösensitz ohne Verprägung ist die Sicht in die Hohlkammerstruktur der zweiten Materiallage 2 möglich. In die sichtbar offenen Hohlkammerstrukturbereiche kann Feuchte und Dreck eindringen und sich dort sammeln. Dies erschwert eine Reinigung des Ladebodens, weshalb es bevorzugt ist, dass alle Durchbrüche in dem Ladeboden, sowie alle Seiten des Ladebodens entweder durch Verprägung oder durch andere Mittel, beispielsweise durch Zuschneiden mit einem Laser geschlossen werden.

Die Figur 5 zeigt ebenfalls einen Verzurrösensitz 5 ohne Verprägung und eine Verprägung 7 im Bereich einer Ladetür, die als schiefe Ebene ausgebildet ist, wie bereits oben beschrieben wurde. Zu erkennen ist ebenfalls, dass die Seiten des Ladebodens in einzelnen Bereichen, zum Beispiel im Bereich von Schnitten mit einem Radius, offen sein kann, so dass einzelne offene oder teiloffene Kammern der zweiten Materiallage 2 zu sehen sind.

## Patentansprüche

1. Einlegeboden für einen Behälter bzw. Behälterboden, aufweisend
a) eine erste Materiallage (1) mit einer Oberseite (1a) und einer Unterseite (1b), und
b) wenigstens eine zweite Materiallage (2) mit einer Oberseite (2a) und einer Unterseite (2b),
c) wobei die erste Materiallage (1) eine Kunststoffschaumschicht und die zweite Materiallage (2) eine Hohlkammerstruktur aus Kunststoff ist, wobei
d) die Oberseite (1a) der ersten Materiallage (1) mit der Unterseite (2b) der zweiten Materiallage (2) verbunden ist, so dass die erste Materiallage (1) relativ zur zweiten Materiallage (2) nicht bewegbar ist, und
e) wenigstens die Oberseite (2a) der zweiten Materiallage (2) eine geschlossene Fläche ist.

2. Einlegeboden/Behälterboden nach Anspruch 1, **dadurch gekennzeichnet, dass** die Hohlkammerstruktur ein Tri-Laminat mit einer Unterschicht (23), einer Oberschicht (21) und einer dazwischen liegenden Abstandshalteschicht (22) ist.

3. Einlegeboden/Behälterboden nach einem der vorgehenden Ansprüche, **dadurch gekennzeichnet, dass** wenigstens die Oberfläche der Unterseite (1b) der ersten Materiallage (1) in Form einer geschlossenen Haut ausgebildet ist.

4. Einlegeboden/Behälterboden nach einem der vorgehenden Ansprüche, **dadurch gekennzeichnet, dass** die Oberseite (1a) der ersten Materiallage (1) mit der Unterseite (2b) der zweiten Materiallage (2) verklebt, verschweißt, aufkaschiert oder durch Materialschluss verbunden ist.

5. Einlegeboden/Behälterboden nach einem der vorgehenden Ansprüche, **dadurch gekennzeichnet, dass** die erste Materiallage (1) und die zweite Materiallage (2) aus dem gleichen Kunststoff oder aus ähnlichen Kunststoffen gebildet sind.

6. Einlegeboden/Behälterboden nach einem der vorgehenden Ansprüche, **dadurch gekennzeichnet, dass** die erste Materiallage (1) bei der Herstellung der Hohlkammerstruktur der zweiten Materiallage (2) inline mit der zweiten Materiallage (2) verbunden wird.

7. Einlegeboden/Behälterboden nach einem der vorgehenden Ansprüche, **dadurch gekennzeichnet, dass** der Einlegeboden/Behälterboden eine dritte Materiallage (3) mit einer Unterseite (3b) und einer Oberseite (3a) aufweist, und die dritte Materiallage (3) auf der Oberseite (2a) der zweiten Materiallage (2) liegt.

8. Einlegeboden/Behälterboden nach dem vorgehenden Anspruch, **dadurch gekennzeichnet, dass** die zweite Materiallage (2) an ihrer Unterseite (2b) und an ihrer Oberseite (2a) offen ist.

9. Einlegeboden/Behälterboden nach einem der zwei vorgehenden Ansprüche, **dadurch gekennzeichnet, dass** die drei Materiallagen (1, 2, 3) aus dem gleichen Kunststoff oder ähnlichen Kunststoffen gebildet sind.

10. Einlegeboden/Behälterboden nach dem vorgehenden Anspruch, **dadurch gekennzeichnet, dass** die zweite Materiallage (2) aus Con-Pearl^{®}-Material gebildet ist.

11. Einlegeboden/Behälterboden nach einem der vier vorgehenden Ansprüche, **dadurch gekennzeichnet, dass** die Oberseite (3a) der dritten Materiallage (3) oder die dritte Materiallage (3) aus einem festen Gewebe, zum Beispiel einem PP-Gewebe, oder einem Gewirke gebildet ist.

12. Einlegeboden/Behälterboden nach einem der fünf vorgehenden Ansprüche, **dadurch gekennzeichnet, dass** die dritte Materiallage (3) eine TPO-Beschichtung aufweist.

13. Einlegeboden/Behälterboden nach einem der sechs vorgehenden Ansprüche, **dadurch gekennzeichnet, dass** die Unterseite (3b) der dritten Materiallage (3) mit der Oberseite (2a) der zweiten Materiallage (2) verklebt, verschweißt, aufkaschiert oder durch Materialschluss verbunden ist.

14. Einlegeboden/Behälterboden nach einem der sieben vorgehenden Ansprüche, **dadurch gekennzeichnet, dass** die erste Materiallage (1) und die dritte Materiallage (3) bei der Herstellung der Hohlkammerstruktur der zweiten Materiallage (2) inline mit der zweiten Materiallage (2) verbunden werden.

15. Einlegeboden/Behälterboden nach einem der vorgehenden Ansprüche, **dadurch gekennzeichnet, dass** es sich bei dem Behälter um ein Fahrzeug, zum Beispiel einen LKW oder Bus, und bei dem Einlegeboden um einen Fahrzeugboden für den Passagierraum oder Laderaum handelt.

16. Einlegeboden/Behälterboden nach einem der vorgehenden Ansprüche, **dadurch gekennzeichnet, dass** der Einlegeboden/Behälterboden eine Dicke von 100 mm hat.

17. Einlegeboden/Behälterboden nach einem der vorgehenden Ansprüche, **dadurch gekennzeichnet, dass** die maximale Flächenbelastung des Einlegebodens/Behälterbodens 3.800 kg/m² ist.

18. Einlegeboden/Behälterboden nach einem der vorgehenden Ansprüche, **dadurch gekennzeichnet, dass** das Gewicht des Einlegebodens/Behälterbodens 3.800 g/m² beträgt.
